# EUROPÄISCHE PATENTSCHRIFT

(11) **EP 1 172 546 B1**
(45) Veröffentlichungstag und Bekanntmachung des Hinweises auf die Patenterteilung: **08.09.2004**
(21) Anmeldenummer: 01116495.1
(22) Anmeldetag: 06.07.2001
(51) Int. Cl.: F02M 31/04, F02M 35/10, B60T 17/00

(54) **Vorrichtung zur Kühlung der Druckluft in einem Nutzfahrzeug**
Device for cooling compressed air in a utility vehicle
Dispositif pour refroidir l'air comprimé dans un véhicule utilitaire

(30) Priorität: 15.07.2000 DE 10034480
(43) Veröffentlichungstag der Anmeldung: 16.01.2002
(73) Patentinhaber: MAN Nutzfahrzeuge Aktiengesellschaft, 80976 München (DE)
(72) Erfinder: Kolland, Wolfgang, Dipl.-Ing., 81245 München (DE)

(56) Entgegenhaltungen:
- EP-A- 0 504 596
- DE-A- 4 202 077
- DE-A- 19 525 541

## Beschreibung

Die Druckluft am Ausgang eines Luftkompressors von Nutzfahrzeugen ist heiß und kann deshalb nicht direkt in die Lufttrocknungseinrichtung und in Regler oder Schaltgeräte von Nutzfahrzeugen geleitet werden. Die Druckluft muss vorher gekühlt werden.

Nutzfahrzeughersteller verwenden in ihren Lastkraftwagen eine Kühlwendel aus einem Metallrohr, die z. B. vor dem Kühler des Antriebsmotors und hinter dem annähernd vertikalen Kühlergrill angeordnet ist. Die Kühlung der Druckluft ist an dieser Stelle recht gut, aber die Kühlwendel erhöht den Ansaugwiderstand der Kühlluft für die Wärmetauschereinheit für den Antriebsmotor und stört bei Wartungs- und Montagearbeiten im Bereich des Kühlers.

So beschreibt etwa die DE 195 25 541 A1 eine Vorrichtung zum Kühlen von Druckluft, die zum Bremsen eines Kraftfahrzeugs verwendet wird. Das Kühlrohr ist auch hier hinter dem Kühlergrill angeordnet und verläuft längs des Umfangs des Lüfterrings. Der Drucklufteinlass befindet sich am höchsten Punkt während sich der Anschluss in der Nähe des tiefsten Punktes des Lüfterringes befindet.

In Lastkraftwagen, die der Anmelder herstellt, wird die Druckluft mit einer Kühlwendel gekühlt, die seitlich am Dieselmotor entlang führt und an diesem gelagert ist. Die Kühlung der Druckluft ist hier nicht so effizient wie bei der Anordnung vor der genannten Wärmetauschereinheit, aber mit einer geringfügig längeren Kühlwendel ist dieser Nachteil ausgleichbar.

Der Druckluftbedarf bei Lastkraftwagen ist über die Jahre ständig angestiegen, vor allem, als die Luftfederung eingeführt wurde. Dadurch wurden größere Luftkompressoren oder zwei Luftkompressoren erforderlich, die hintereinander angeordnet und von einer Antriebswelle oder in V-Form angeordnet und ebenfalls von einer Antriebswelle angetrieben sind. Die Kühlung der Druckluft wurde damit bereits wesentlich schwieriger bzw. teuerer.

Weiterhin wurde der Systemdruck von Druckluftanlagen erhöht, um die Druckluftvorratsbehälter und Arbeitsgeräte kleiner dimensionieren zu können. Durch den höheren Systemdruck wird aber auch die verdichtete Luft am Austritt des Luftkompressors heißer. Auch dies erhöht den Kühlbedarf der Druckluft.

Schließlich werden die Dieselantriebsmotore immer stärker und müssen, trotz höherer Leistung in Verbindung mit dem Fahrzeug die strengen Anforderungen einer geringen Schallemission an das Fahrzeug erfüllen. Dadurch werden schallschützende Maßnahmen, die fahrzeugseitig volumig bauen und den Motorraum einengen, erforderlich. Dadurch wird die Durchströmung des Motorraumes mit der Abluft des Lüfters für den Motorkühler wesentlich verschlechtert, so dass die Kühlung der genannten Kühlwendel neben dem Dieselmotor nicht mehr gut wirksam ist.

Der Erfindung liegt die Aufgabe zugrunde, eine effiziente Kühlung der Druckluft unter den erschwerenden Bedingungen, wie geringer Platzbedarf, hoher Druckluftbedarf und hoher Systemdruck des Druckluftsystems, zu schaffen.

Die Aufgabe wird erfindungsgemäß durch die Merkmale des Anspruches 1 gelöst.

Dadurch, dass die Kühlung der Druckluft im Ansaugkanal der Motorverbrennungsluft angeordnet ist, ist immer kühle Luft, die praktisch Außentemperatur hat, zur Kühlung der Druckluft vorhanden.

Die genannte Anordnung der Druckluftkühlung ist deshalb möglich, weil die Kühlwendel in einem erweiterten Bereich der Motorenverbrennungsluft-Ansaugung angeordnet ist. Deshalb ist auch kaum eine Unterdruckerhöhung in der Ansauganlage gegeben, weil die Strömungsgeschwindigkeit in dem erweiterten Bereich der Ansauganlage niedrig ist.

Weiterhin wird die Motorverbrennungsluft erwärmt. Die Erwärmung ist jedoch gering, da die angesaugte Luftmasse der Motorverbrennungsluft relativ zur abzukühlenden Druckluft hoch ist.

Hinzu kommt noch, dass Nutzfahrzeug-Dieselmotoren eine Lagegruppe zum Verdichten der Verbrennungsluft haben, die anschließend in einem Ladeluftkühler gekühlt werden muss. Falls der Extremfall auftreten würde, dass sich die Temperatur der Motorverbrennungsluft durch die Kühlung der Druckluft merklich erhöht, könnte der Ladeluftkühler etwas vergrößert werden, so dass die gewünschte Eintrittstemperatur der Motorverbrennungsluft in die Zylinder eingehalten wird.

Vorzugsweise wird zur Kühlung der Druckluft eine Kühlwendel, die aus einem Metallrohr, z. B. einem Stahlrohr besteht, verwendet. Die Ausführung ist preiswert und die Biegevorrichtungen für das Stahlrohr sind vorhanden. Auch ist kein Zusetzen der Kühlwendel durch Ölkohle, die z. B. durch nicht mehr ganz intakte Kolbenringe des Luftkompressors entstehen kann, zu befürchten.

Weiterhin hat die genannte Kühlwendel den Vorteil, dass Reparaturen daran auch in einfach eingerichteten Werkstätten manuell durchgeführt oder die Kühlwendel manuell nachgebaut werden kann.

Es ist aber auch möglich, zur Kühlung der Druckluft einen Luft/Luft-Wärmetauscher in einen erweiterten Bereich der Ansauganlage einzubauen. Bei geeigneter Auslegung kann eine solche Ausführung ebenso robust sein, wie eine Kühlwendel und hätte vielleicht sogar eine kostengünstigere Erstmontage zur Folge.

Die Kühlung der Druckluft erfolgt vorteilhafter Weise vor dem Luftfilter, also auf der Rohluftseite, weil hier am leichtesten eine Erweiterung des Querschnittes der Ansauganlage möglich ist. Das Kühlorgan zum Kühlen der Druckluft muss deshalb entsprechend weitmaschig sein, damit es nicht zusetzt.

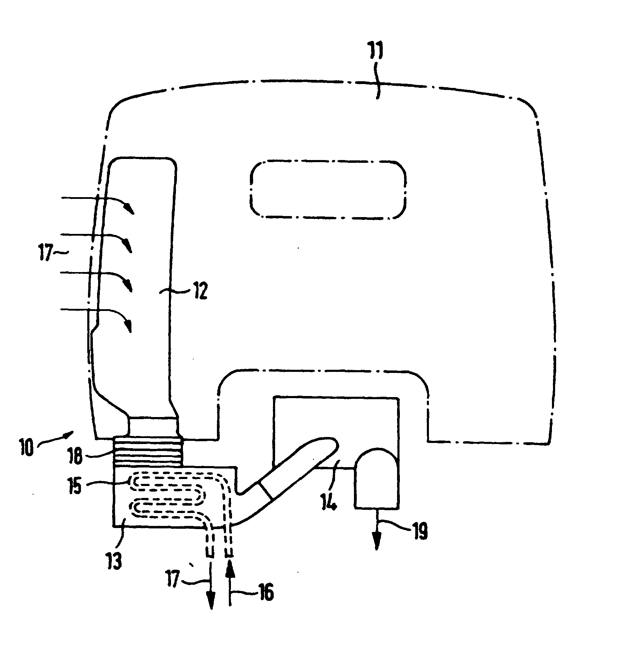

In der Zeichnung ist ein Ausführungsbeispiel der Erfindung schematisch dargestellt.

Die Zeichnung zeigt einen Ansaugkanal 10, der an der Fahrerhausrückwand 11 eines Lastkraftwagens angebracht ist. Über den Ansaugdämpfer 12 wird die Rohluft 17 bzw. die Motorverbrennungsluft 17 angesaugt und gelangt über ein elastisches Zwischenstück 18, z. B. einem Balg 18, in den querschnittserweiterten Bereich 13 des Ansaugkanals 10.

Der querschnittserweitertem Bereich 13 kann auch ein akustischer Resonator 13 sein, wobei in jedem Fall das Teil 13 z. B. aus zwei Hälften besteht, die durch Schnellverschlüsse oder sonstige Verschlussmechanismen zusammengehalten sind, wodurch ein schneller Zugang zur Kühlwendel 15 möglich ist.

In der Zeichnung ist eine Kühlwendel 15 eingezeichnet, mit der heiße Druckluft 16 zu abgekühlter Druckluft 17 gekühlt wird. Die Kühlwendel 15 besteht vorteilhafter Weise aus einem Stahlrohr. Anstatt einer Kühlwendel 15 kann auch ein Luft/Luft-Wärmetauscher (nicht gezeichnet) verwendet werden.

Im Luftfilter 14 wird die Motorverbrennungsluft gefiltert und wird als Reinluft 19 zum Verdichten in den Verdichter der Ladegruppe (nicht gezeichnet) geleitet.

## Patentansprüche

1. Druckluftkühlvorrichtung eines Nutzfahrzeugs, der Druckluft aus mindestens einem Luftkompressor zugeführt wird, wobei die Druckluft zur Befüllung der Druckluftvorratsbehälter dient, von denen aus die verschiedenen Druckluftverbraucher bedient werden, **dadurch gekennzeichnet, dass** eine Kühlung der Druckluft (16) im Ansaugkanal (10) der Motorverbrennungsluft erfolgt.

2. Vorrichtung nach Anspruch 1, **dadurch gekennzeichnet, dass** die Kühlung der Druckluft (16) in einem querschnittserweiterten Bereich (13) des Ansaugkanals (10) erfolgt.

3. Vorrichtung nach den Ansprüchen 1 und 2, **dadurch gekennzeichnet, dass** die Kühlung der Druckluft (16) mittels einer Kühlwendel (15), die aus einem Metallrohr (15) besteht, erfolgt.

4. Vorrichtung nach den Ansprüchen 1 und 2, **dadurch gekennzeichnet, dass** die Kühlung der Druckluft (16) mittels eines Luft/Luft-Wärmetauschers erfolgt.

5. Vorrichtung nach den vorhergehenden Ansprüchen, **dadurch gekennzeichnet, dass** im Ansaugkanal (10) ein Luftfilter vorgesehen ist, der in Strömungsrichtung der Motorverbrennungsluft der Kühlung der Druckluft (16) nachgeschaltet ist.

## Claims

1. Compressed-air cooling device for a commercial vehicle, supplied with compressed air from at least one air compressor, the compressed air being used for filling the compressed-air reservoirs from which the various compressed-air consumers are supplied, **characterised in that** the compressed air (16) is cooled in the intake duct (10) for the engine combustion air.

2. Device according to Claim 1, **characterised in that** the compressed air (16) is cooled in an area of the intake duct (10) which has an enlarged cross-section (13).

3. Device according to the Claims 1 and 2, **characterised in that** the compressed air (16) is cooled by means of a cooling coil (15) consisting of a metal pipe (15).

4. Device according to the Claims 1 and 2, **characterised in that** the compressed air (16) is cooled by means of an air/air heat exchanger.

5. Device according to the foregoing Claims, **characterised in that** in the intake duct (10) an air filter is provided which in respect of the flow direction of the engine combustion air is fitted downstream of the area where the compressed air (16) is cooled.

## Revendications

1. Dispositif de refroidissement d'air comprimé d'un véhicule industriel, qui guide de l'air comprimé à partir d'au moins un compresseur d'air, auquel cas l'air comprimé sert à remplir les réservoirs d'air comprimé à partir desquels les différents consommateurs en air comprimé sont alimentés, **caractérisé par le fait qu'**un refroidissement de l'air comprimé (16) a lieu dans le conduit d'admission (10) d'air de combustion du moteur.

2. Dispositif selon la revendication 1, **caractérisé par le fait que** le refroidissement de l'air comprimé (16) a lieu dans une partie élargie transversalement (13) du conduit d'admission (10)

3. Dispositif selon les revendications 1 et 2, **caractérisé par le fait que** le refroidissement de l'air comprimé (16) a lieu au moyen d'un serpentin réfrigérant (15) composé d'un tuyau métallique (15).

4. Dispositif selon les revendications 1 et 2, **caractérisé par le fait que** le refroidissement de l'air comprimé (16) a lieu au moyen d'un échangeur thermique air/air.

5. Dispositif selon les revendications mentionnées précédemment, **caractérisé par le fait que** le conduit d'admission est doté d'un filtre à air placé en aval du refroidissement de l'air comprimé (16) dans le sens d'écoulement de l'air de combustion du moteur.
